(19) Europäisches Patentamt / European Patent Office / Office européen des brevets

(11) **EP 1 378 552 B1**

(12) **EUROPEAN PATENT SPECIFICATION**

(45) Date of publication and mention of the grant of the patent:
**19.11.2008 Bulletin 2008/47**

(21) Application number: **02712442.9**

(22) Date of filing: **19.02.2002**

(51) Int Cl.:
**C09D 201/00** (2006.01)   **C09D 127/12** (2006.01)
**C09D 133/00** (2006.01)   **C09D 183/00** (2006.01)
**C09D 5/02** (2006.01)   **C09D 133/02** (2006.01)
**C08L 101/00** (2006.01)

(86) International application number:
**PCT/JP2002/001399**

(87) International publication number:
**WO 2002/068552 (06.09.2002 Gazette 2002/36)**

(54) **RESIN COMPOSITION FOR WATER-BASED COATING MATERIAL**

HARZZUSAMMENSETZUNG FÜR WASSERLACK

COMPOSITION DE RESINE POUR MATIERE DE REVETEMENT A BASE D'EAU

(84) Designated Contracting States:
**DE FR GB IT**

(30) Priority: **27.02.2001   JP 2001051536**

(43) Date of publication of application:
**07.01.2004   Bulletin 2004/02**

(73) Proprietor: **DAIKIN INDUSTRIES, LTD.**
**Osaka-shi, Osaka 530-8323 (JP)**

(72) Inventors:
• **KUNIMASA, Keiko,**
**c/o DAIKIN INDUSTRIES, LTD**
**Settsu-shi, Osaka 566-8585 (JP)**
• **WADA, Susumu,**
**c/o DAIKIN INDUSTRIES, LTD**
**Settsu-shi, Osaka 566-8585 (JP)**
• **MITSUHATA, Nobuo,**
**c/o DAIKIN INDUSTRIES, LTD**
**Settsu-shi, Osaka 566-8585 (JP)**
• **FUWA, Tsunehiko,**
**c/o DAIKIN INDUSTRIES, LTD**
**Settsu-shi, Osaka 566-8585 (JP)**
• **MOHRI, Haruhiko,**
**c/o DAIKIN INDUSTRIES, LTD**
**Settsu-shi, Osaka 566-8585 (JP)**

(74) Representative: **Goddar, Heinz J.**
**Forrester & Boehmert**
**Pettenkoferstrasse 20-22**
**80336 München (DE)**

(56) References cited:
**EP-A1- 0 806 462        EP-A2- 0 202 494**
**JP-A- 10 077 439        JP-A- 2000 080 333**
**JP-A- 2000 169 710      US-A1- 5 714 532**

• **DATABASE WPI Week 200056 Derwent Publications Ltd., London, GB; AN 2000-589843 XP002426161 & JP 2000 198920 A (NIPPON NSC KK) 18 July 2000 (2000-07-18)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a resin composition for aqueous paint which is excellent in non-stain-adhering property and weather resistance and can provide a coating film having a high gloss.

BACKGROUND ART

It is known that there have been trials to improve non-stain-adhering property and weather resistance by adding various silane compounds to paints.

For example, in JP6-506632A and WO95/02462, coating compositions prepared by adding a tetra-functional silicate compound to an organic paint are disclosed.

Those publications disclose an application of a tetra-functional silicate compound to an aqueous paint, and also describe an example of adding the silicate compound to an acryl emulsion paint. However it is hard to say that balanced enhancement of non-stain-adhering property, gloss, hardness and weather resistance of an obtained coating film is enough.

Though technologies of adding various silane compounds to synthetic resin emulsions are disclosed in JP11-148019A, JP10-110078A, JP10-25446A, JP8-259892A, JP2000-44836A, USP5714532, USP5686523, JP2000-212513A, it is hard to say like the above-mentioned publications that balanced enhancement of non-stain-adhering property, gloss and hardness of an obtained coating film is enough.

EP 0 202 494 is directed to a method for producing an aqueous silicone emulsion composition on the basis of an organopolysiloxane.

EP 0 806 462 is directed to a curable resin composition for water-based paints including an emulsion polymer containing tertiary amino groups and a compound containing an epoxy group and a hydrolysable silyl group.

JP 2000198920 is related to a polyisocyanate composition easily dispersible in water having handling properties.

An object of the present invention is to provide a resin composition for aqueous paint which has well-balanced non-stain-adhering property and weather resistance and can provide a coating film having a high gloss.

DISCLOSURE OF INVENTION

Namely, the present invention relates to a resin composition for aqueous paint according to claim 1.

Further embodiments are defined by claims 2 to 6.

It is preferable that the silane coupling agent (B) of the formula (I) and/or the silane compound of the formula (II) and/or a partly hydrolyzed condensate thereof (C) (hereinafter simply referred to as "silane compound (C)") are mixed to the synthetic resin emulsion (A) in the form of emulsion, particularly an emulsion of a nonionic emulsifying agent and/or an anionic emulsifying agent.

Examples of the suitable fluorine-containing resin are a fluoroolefin polymer or copolymer and/or a copolymer of fluoroolefin and non-fluorine-containing monomer.

Suitable as the silane compound (C) is at least one selected from the group consisting of tetramethoxysilane, tetraethoxysilane, tetra-n-propoxysilane, tetra-i-propoxysilane, tetra-n-butoxysilane, tetra-i-butoxysilane, tetra-t-butoxysilane and partly hydrolyzed condensates thereof.

A curing catalyst (D) may be contained in the resin composition for aqueous paint of the present invention in an amount of from 0.1 to 10 parts by weight based on 100 parts by weight of the silane coupling agent (B) or based on 100 parts by weight of the sum of the silane coupling agent (B) and the silane compound (C).

BEST MODE FOR CARRYING OUT THE INVENTION

Product names designated by "*" are either registered trademarks or tradenames of the indicated companies.

The fluorine-containing resin emulsion (A) which is used in the present invention is a commercially available emulsion for aqueous paints or a resin emulsion as far as it is made in paints. A coating film formed using an obtained curable resin composition is excellent in weather resistance and chemical resistance and wide range of polymer design can be used.

Examples of the fluorine-containing resin are fluoroolefin polymers and copolymers, copolymers of fluoroolefin and monomer copolymerizable therewith and blended resins and composite resins of those polymers with other resins not having fluorine atom.

Examples of the fluoroolefin are, for instance, fluoroolefins having from about 2 carbon atoms to about 4 carbon atoms such as vinyl fluoride, vinylidene fluoride (VdF), tetrafluoroethylene (TFE), chlorotrifluoroethylene (CTFE), hexafluoropropylene (HFP) and trifluoroethylene. Examples of the above-mentioned non-fluorine-containing monomer copolymerizable with the fluoroolefin are, for instance, ethylene; α-olefins such as propylene and isobutylene; vinyl ethers such as ethyl vinyl ether (EVE), cyclohexyl vinyl ether (CHVE), hydroxybutyl vinyl ether (HBVE), butyl vinyl ether, isobutyl vinyl ether, methyl vinyl ether and polyoxyethylene vinyl ether; alkenyls such as polyoxyethylene allyl ether, ethyl allyl ether, hydroxyethyl allyl ether, allyl alcohol and allyl ether; vinyl esters such as vinyl acetate, vinyl lactate, vinyl butyrate, vinyl pivalate, vinyl benzoate and VEOVA9* and VEOVA10* (both are available from SHELL CHEMICAL); ethylenically unsaturated carboxylic acids such as itaconic anhydride, succinic anhydride and crotonic acid.

Examples of the fluoroolefin copolymers are VdF copolymers such as VdF/TFE copolymer, VdF/HFP copolymer, VdF/CTFE copolymer, VdF/TFE/CTFE copolymer and VdF/TFE/HFP copolymer; TFE/HFP copolymer. Particularly preferred are VdF/HFP copolymer, VdF/CTFE copolymer, VdF/TFE/HFP copolymer and VdF/TFE/CTFE copolymer. Examples of the copolymer of fluoroolefin and non-fluorine-containing monomer are copolymers of CTFE and vinyl ethers.

Examples of the blended resins and composite resins of those polymers with non-fluorine-containing resins are fluorine-containing composite resins obtained by seed-polymerizing a monomer having α,β-unsaturated group in an aqueous medium in the presence of particles of VdF copolymer.

The solid content of the above-mentioned synthetic resin emulsion (A) is from 20 % by weight to 70 % by weight, preferably from 30 % by weight to 60 % by weight from the viewpoint of stability at forming into a paint. An average particle size of the particles is from 50 nm to 300 nm, preferably from 100 nm to 200 nm from the viewpoint of stability of the emulsion. The pH value of this aqueous dispersion is usually in the range of from 5 to 10.

With respect to the synthetic resin emulsion (A) which is used in the present invention and the preparation process thereof, there can be used those described, for example, in WO95/08582, JP2-70706A, JP3-37252A and JP8-259892A.

To the resin composition for paint of the present invention is added, as the component (B), the silane coupling agent represented by the above-mentioned formula (I):

$$(R^1O)_3SiR^2$$

wherein $R^1$ is the same or different and each is an organic group having 1 to 20 carbon atoms, $R^2$ is an epoxy-containing organic group having a ring structure.

Examples of the preferred $R^1$ are, for instance, an alkyl group having 1 to 10 carbon atoms, and an acyl group having 1 to 10 carbon atoms. Examples of the preferred $R^2$ are, for instance, epoxy-containing organic groups of C3 to C20 having, as a ring structure, an aliphatic ring structure, an aromatic ring structure or the like, more preferably epoxy-containing organic groups of C3 to C20 having, as a ring structure, a cyclohexyl ring, cyclopentyl ring.

Examples thereof are, for instance, β-(3,4-epoxycyclohexyl)ethyltrimethoxysilane, and β-(3,4-epoxycyclohexyl) ethyltriethoxysilane. An example thereof available on the market is CoatOSil 1770 Silane* (Crompton Corporation). Further there can be used those described in USP5714532, USP5686523 and JP2000-212513A.

An adding amount (solid content) of the silane coupling agent (B) is from 0.1 to 30 parts by weight, preferably from 0.5 to 10 parts by weight, more preferably from 1 to 5 parts by weight based on 100 parts by weight of the synthetic resin emulsion (A). If the amount of the silane coupling agent (B) is too large, a pot life becomes short, and if the amount is too small, hardness and gloss of an obtained coating film are lowered.

In the present invention, it is further preferable to add (C) the silane compound represented by the formula (II): $(R^3O)_{4-a}SiR^4_a$, wherein $R^3$ is the same or different and each is an organic group having 1 to 20 carbon atoms, $R^4$ is the same or different and each is an organic group having 1 to 20 carbon atoms, a is 0 or 1, and/or the partly hydrolyzed condensate thereof, from the viewpoint of enhancement of hardness and non-stain-adhering property of the obtained coating film.

Examples of the preferred $R^3$ are, for instance, an alkyl group having 1 to 10 carbon atoms, and an acyl group having 1 to 10 carbon atoms. Preferred $R^4$ are, for instance, aryl, amino-containing group, polyethylene oxide chain-containing group, and an alkyl group having 1 to 10 carbon atoms. Particularly most preferred are tetra-functional ones of a=0.

Examples of the silane compound are, for instance, tetraalkyl silicates such as tetramethyl silicate, tetraethyl silicate, tetra-n-propyl silicate, tetra-i-propyl silicate, tetra-n-butyl silicate, tetra-i-butyl silicate, tetra-t-butyl silicate and MSi51*, ESi28* and ESi40* available from COLCOAT CO., LTD. and/or the partly hydrolyzed condensates thereof; trialkoxy silanes such as methyltrimethoxysilane, methyltriethoxysilane, ethyltrimethoxysilane, ethyltriethoxysilane, propyltrimethoxysilane, propyltriethoxysilane, butyltrimethoxysilane, butyltriethoxysilane, pentyltrimethoxysilane, pentyltriethoxysilane, hexyltrimethoxysilane, hexyltriethoxysilane, heptyltrimethoxysilane, heptyltriethoxysilane, phenyltrimethoxysilane, phenyltriethoxysilane, octadecyltriethoxysilane, 3-glycidoxypropyltrimethoxysilane, 3-(meth)acryloxypropyltrimethoxysilane, 3-(meth)acryloxypropyltriethoxysilane, methyltrisec-octyloxysilane, methyltributoxysilane, AFP-1* (available from SHIN-ETSU CHEMICAL CO., LTD.) and/or the partly hydrolyzed condensates thereof.

When the silane compound (C) is added, the proportion of the synthetic resin emulsion (A), the silane coupling agent (B) and the silane compound (C) is 100 parts by weight of the component (A) (solid content), from 0.1 to 30 parts by weight of the component (B) and from 1 to 50 parts by weight of the component (C), further 100 parts by weight of the component (A), from 0.1 to 10 parts by weight of the component (B) and from 5 to 30 parts by weight of the component (C), particularly 100 parts by weight of the component (A), from 1 to 10 parts by weight of the component (B) and from 10 to 20 parts by weight of the component (C).

The resin composition for aqueous paint of the present invention is prepared by mixing the silane coupling agent (B) and the silane compound (C) to the synthetic resin emulsion (A). It is preferable that the component (B) and the component (C) are mixed in the form emulsified with an emulsifying agent since uniform mixing can be carried out, stability of the obtained coating composition is good and the obtained coating film has a high gloss and a high hardness.

As the emulsifying agent for preparing the emulsion, there can be used any of nonionic, anionic, cationic and ampholytic emulsifying agents. From the viewpoint of stability of the silicon compounds such as the components (B) and (C) and water resistance and durability of the dried coating film, it is preferable to use a nonionic emulsifying agent, and an anionic emulsifying agent can be used together from the viewpoint of good dispersion stability of the emulsion.

The usable nonionic emulsifying agent is for example, polyoxyethylene alkyl aryl ethers such as polyoxyethylene dodecyl phenyl ether, polyoxyethylene nonyl phenyl ether and polyoxyethylene octyl phenyl ether; polyoxyethylene alkyl ethers such as polyoxyethylene lauryl ether, polyoxyethylene stearyl ether, polyoxyethylene oleyl ether and polyoxyethylene cetyl ether; polyoxyethylene fatty acid esters such as polyoxyethylene stearate, polyoxyethylene oleate and polyoxyethylene laurate; glycerine fatty acid esters such as glycerol monostearate and glycerol monooleate; sorbitan fatty acid esters such as sorbitan monopalmitate, sorbitan monostearate, sorbitan tristearate, sorbitan monooleate, sorbitan trioleate and sorbitan monosesquioleate; polyoxyethylene sorbitan fatty acid esters such as polyoxyethylene sorbitan monolaurate, polyoxyethylene sorbitan monopalmitate, polyoxyethylene sorbitan monostearate and polyoxyethylene sorbitan monooleate; polyoxyethylene sorbitol fatty acid esters such as polyoxyethylene sorbitol tetraoleate.

In addition, there can be used fluorine-containing nonionic emulsifying agents and silicon nonionic emulsifying agents. Examples of the fluorine-containing nonionic emulsifying agent are, for instance, nonionic perfluoroalkyl-containing polyoxyethylene oxides such as polyalkylene oxides modified with perfluoroalkylsulfonic acid amide.

Examples of the silicon nonionic emulsifying agent are, for instance, nonionic polyalkylene oxide-modified polydimethylsiloxanes obtained by modifying one end and/or both ends and/or a side chain of polydimethylsiloxane with polyalkylene oxide and the like. Examples thereof are KF-351*, KF-352*, KF-353*, KF-354*, KF-355*, KF-615*, KF-618*, KF-945*, KF-907* and X-22-6008* (available from SHIN-ETSU CHEMICAL CO., LTD.).

As the anionic emulsifying agent, there can be used known anionic emulsifying agents. Examples thereof are, for instance, sulfonates such as sodium dodecyl sulfonate, sodium dodecylbenzene sulfonate and sodium isooctylbenzene sulfonate; anionic emulsifying agents having (poly)oxyethylene group such as Newcol-723SF*, Newcol-707SN*, Newcol-707SF*, Newcol-740SF* and Newcol-560SN* (available from NIPPON NYUKAZAI CO., LTD.).

For use of these emulsifying agents, methods for use described in JP8-259892A and JP10-25446A can be employed preferably.

In the synthetic resin composition for aqueous paint of the present invention, when the synthetic resin of the synthetic resin emulsion (A) has crosslinking points such as carboxyl or an alkoxysilyl group, strength of a coating film can be increased and further gloss thereof can also be enhanced. In this case, when the curing catalyst (D) is added to the composition, strength, gloss and hardness of the coating film can be further increased.

An adding amount of the curing catalyst (D) is from 0.1 to 50 parts by weight, preferably from 1 to 5 parts by weight based on 100 parts by weight of the component (B) or based on 100 parts by weight of the sum of the components (B) and (C) when the component (C) is used together.

Examples of the curing catalyst are, for instance, organotin compounds such as dibutyltindilaurate, dibutyltinmaleate, dioctyltindilaurate, dioctyltinmaleate and tin octylate; phosphoric acids or phosphoric acid esters such as phosphoric acid, monomethyl phosphate, monoethyl phosphate, monobutyl phosphate, monooctyl phosphate, monodecyl phosphate, dimethyl phosphate, diethyl phosphate, dibutyl phosphate, dioctyl phosphate and didecyl phosphate; addition reaction products of phosphoric acid and/or acidic monophosphate with epoxy compounds such as propylene oxide, butylene oxide, cyclohexene oxide, glycidyl methacrylate, glycidol, acryl glycidyl ether, γ-glycidoxypropyl triethoxysilane, γ-glycidoxypropyl methyldimethoxysilane, (3,4-epoxycyclohexyl)ethyltrimethoxysilane and CARDURA (E)*, EPIKOTE828* and EPIKOTE1001* available from JAPAN EPOXY RESINS CO., LTD.; organotitanium compounds; organoaluminum compounds; organozirconium compounds; acid compounds such as maleic acid, adipic acid, azelaic acid, sebacic acid, itaconic acid, citric acid, succinic acid, trimellitic acid, pyromellitic acid, acidic anhydrides thereof and paratoluenesulfonic acids; amines such as hexylamine, di-2-ethylhexylamine, N,N-dimethyldodecylamine and dodecylamine; mixtures or reaction products of those amines with acidic phosphates; alkaline compounds such as sodium hydroxide and potassium hydroxide; imidazole compounds such as 2-ethyl-4-methyl imidazole.

Though the resin composition for aqueous paint of the present invention has a good film formation ability even as it is, the ability can be further enhanced by using a co-solvent. Examples of the co-solvent are, for instance, alcohols such as methyl alcohol, ethyl alcohol, propyl alcohol, isopropyl alcohol, n-butyl alcohol, isobutyl alcohol, hexyl alcohol and octyl alcohol; ethers such as cellosolve, ethyl cellosolve, butyl cellosolve, diethyleneglycol monoethyl ether, diethyleneglycol monobutyl ether, propyleneglycol monoethyl ether, propyleneglycol monobutyl ether, propyleneglycol monoisobutyl ether, dipropyleneglycol monoethyl ether, dipropyleneglycol monobutyl ether, dipropyleneglycol isobutyl ether, tripropyleneglycol monoethyl ether, tripropyleneglycol monobutyl ether and tripropyleneglycol monoisobutyl ether; glycol ether esters such as butyl cellosolve acetate, diethyleneglycol monobutyl ether acetate, dipropyleneglycol monobutyl ether acetate, tripropyleneglycol monobutyl ether acetate and tripropyleneglycol monoisobutyl ether acetate.

Those co-solvents may be added when polymerizing the synthetic resin of the synthetic resin emulsion (A) or after the polymerization.

In the present invention, to the resin composition for aqueous paint may be added, as case demands, additives which are usually used as components for paint, such as pigments (white pigments such as titanium dioxide, calcium carbonate, barium carbonate and kaoline, and color pigments such as carbon, red iron oxide and cyanine blue), plasticizer, solvent, dispersant, thickener, defoaming agent, antiseptics, antisettling agent, leveling agent, ultraviolet light absorbent. For example, when titanium dioxide having an isoelectric point of 7 or more is used, gloss and weather resistance of an obtained coating film are enhanced. Examples of the titanium dioxide having an isoelectric point of 7 or more are, for instance, JR805*, JR901*, JR603* and JR602* (available from TAYCA CORPORATION).

To the composition for aqueous paint of the present invention are optionally added the above-mentioned additives, and the composition can be coated on various substrates by usual coating methods. Examples of the coating method are, for instance, brush coating, spray coating, roller coating. Examples of the substrate are, for instance, concrete, wood, metal (iron, stainless steel, and aluminum, etc.), plastic, and other coating films.

When the coating film is dried for curing at a temperature of from room temperature to 120°C after the coating, a cured coating film having well-balanced non-stain-adhering property, strength, gloss and weather resistance can be obtained.

Though mechanism for exhibiting desired effects according to the present invention is not clear, it is assumed that hardness and hydrophilic property (non-stain-adhering property) of the coating film surface are enhanced since the silane coupling agent (B) and the silane compound (C) are localized at high concentrations around the surface of the coating film when the film of the synthetic resin of the component (A) is formed. Also when the silane coupling agent (B) is used together, it is assumed that an interaction (crosslinking reaction) occurs between the curable synthetic resin of the component (A) and the silane coupling agent (B) and further between the components (B) and (C), and as a result, gloss of the coating film is increased and the surface hardness is further increased, which makes the coating film hardly be damaged and prevents staining of the coating film.

The resin composition for aqueous paint of the present invention can be used as a coating composition for various applications and is particularly suitable for weather resistant paints, stain-proofing paints and heavy duty paints which are used for articles and buildings for outdoor use.

The present invention is then explained by means of examples, comparative examples and preparation examples.

In examples, comparative examples and preparation examples, "part" and "%" represent "part by weight" and "% by weight", respectively.

PREPARATION EXAMPLE 1

(Preparation of white paint)

There was used, as a base emulsion, ZEFFLE SE310* available from DAIKIN INDUSTRIES, LTD. (aqueous emulsion of a composite resin comprising vinylidene fluoride resin and acrylic resin which contains carboxyl since acrylic acid is used partly as the acrylic monomer. pH: 7, solid content: 51 %).

Separately, in 10.0 parts of water were dispersed 5.3 parts of SN5027* (available from SAN NOPCO LIMITED) as a dispersant, 0.3 part of FS013B* (available from Dow Corning) as a defoaming agent, 4.0 parts of ethylene glycol, 0.1 part of 28 % ammonia water and 70.0 parts of TIPEK CR97* (available from ISHIHARA SANGYO KAISHA, LTD.) as a titanium oxide with a sand mill to prepare a pigment paste.

Subsequently, to 68.2 parts of the above-mentioned ZEFFLE SE310* was added 0.6 part of 28 % ammonia water and then 24.1 parts of the above-mentioned pigment paste, 5.1 parts of diethyl adipate, 0.1 part of FS013B* (available from DOW CORNING) as a defoaming agent and 1.9 parts of 10 % aqueous solution of ADEKANOL UH420* (available from ASAHI DENKA CO., LTD.) as a thickener, followed by stirring at 400 rpm for one hour to obtain a white paint.

PREPARATION EXAMPLE 2

(Preparation of emulsion of silane coupling agent (B) and silane compound (C))

A mixture comprising 5 parts of METHYL SILICATE 51* (partly hydrolyzed condensate of tetramethyl silicate available from COLCOAT CO., LTD.), 10 parts of ETHYL SILICATE 40* (partly hydrolyzed condensate of tetraethyl silicate available from COLCOAT CO., LTD.), 5 parts of β-(3,4-epoxycyclohexyl)ethyltriethoxysilane and 1 part of 2-ethyl-4-methylimidazole was mixed with 2 parts of polyoxyethylene sorbitan laurate having HLB of 16.3 and 2 parts of sorbitan oleate having HLB of 6.4, followed by stirring at high speed of not less than 1,000 rpm and slowly adding 75 parts of deionized water thereto to prepare an emulsion (S1) of the silane coupling agent (B) and the silane compound (C).

PREPARATION EXAMPLE 3

(Preparation of emulsion of silane coupling agent (B) and silane compound (C))

To 15 parts of ETHYL SILICATE 40* (available from COLCOAT CO., LTD.) were added 5 parts of β-(3,4-epoxycyclohexyl)ethyltriethoxysilane, 1 part of 2-ethyl-4-methylimidazole and 5 parts of diethyl adipate as an organic solvent, and in the mixture was dissolved 1 part of a nonionic polyoxyethylene sorbitan ester emulsifying agent SL10* (available from NIPPON CHEMICAL CO., LTD., HLB: 8.6). To the obtained mixture was added 63 parts of 0.1 % aqueous solution of sodium hydrogencarbonate (pH: 7.8, 20˚C), followed by stirring at high speed of not less than 1,000 rpm to prepare an emulsion (S2) of the silane coupling agent (B) and the silane compound (C).

PREPARATION EXAMPLE 4

(Preparation of emulsion of silane coupling agent (B))

A mixture comprising 20 parts of β-(3,4-epoxycyclohexyl)ethyltriethoxysilane and 1 part of 2-ethyl-4-methylimidazole was mixed with 2 parts of polyoxyethylene sorbitan laurate having HLB of 16.3 and 2 parts of sorbitan oleate having HLB of 6.4, followed by stirring at high speed of not less than 1,000 rpm and slowly adding 75 parts of deionized water thereto to prepare an emulsion (S3) of the silane coupling agent (B).

PREPARATION EXAMPLE 5

(Preparation of emulsion of silane compound (C))

A mixture comprising 5 parts of METHYL SILICATE 51* (available from COLCOAT CO., LTD.), 10 parts of ETHYL SILICATE 40* (available from COLCOAT CO., LTD.) and 1 part of 2-ethyl-4-methylimidazole was mixed with 2 parts of polyoxyethylene sorbitan laurate having HLB of 16.3 and 2 parts of sorbitan oleate having HLB of 6.4, followed by stirring at high speed of not less than 1,000 rpm and slowly adding 80 parts of deionized water thereto to prepare an emulsion (S4) of the silane compound (C).

EXAMPLES 1 to 3 and COMPARATIVE EXAMPLES 1 to 2

To 100 parts (solid content of resin) of the white paint obtained in Preparation Example 1 were added the emulsions (S1 to S4) prepared in Preparation Examples 2 to 5, respectively in amounts (part by weight of solid content) shown in Table 1, followed by sufficiently stirring and mixing for 15 minutes to obtain resin compositions for aqueous paint.

The amounts of the silane coupling agent (B) and silane compound (C) in the emulsions which are shown in Table 1 are parts by weight of the silane coupling agent (B) and silane compound (C) based on 100 parts by weight of the solid content of the resin in the white paint.

On an aluminum plate subjected to AM712 chemical conversion treatment prescribed in JIS H 4000 was coated the obtained coating composition with a 10 mil doctor blade, followed by drying at room temperature for three days to obtain a coated test plate. With respect to this coated test plate, the following measurements were carried out. The results are shown in Table 1.

Gloss: Gloss of the coating film is measured with a gloss meter (available from SUGA SHIKENKI KABUSHIKI KAISHA).

Pencil hardness: Measured according to JIS K 5400.

Xylene resistance: The surface of the coating film is rubbed repeatedly with a waste cloth impregnated with xylene according to JIS K 5400 and an appearance of the surface is evaluated with naked eyes.

Water contact angle after exposure: The coated test plate is subjected to one-month outdoor-exposure test being inclined at 30° toward southern direction on the roof of a laboratory (three-storied building) of Yodogawa-seisakusho of DAIKIN INDUSTRIES, LTD. in Settsu-shi, Osaka Prefecture. After the one-month exposure, the test plate is washed with flowing water and a static contact angle of water on the plate is measured with a contact angle meter (available from KYOWA KAGAKU KABUSHIKI KAISHA).

Staining after exposure: Color (L value) of the coated test plate is measured with DP300 available from MINOLTA CO., LTD., and the measured value is assumed to be an initial value. Then the coated test plate is subjected to six-month outdoor-exposure test being inclined at 30° toward southern direction on the roof of a laboratory (three-storied building) of Yodogawa-seisakusho of DAIKIN INDUSTRIES, LTD. in Settsu-shi, Osaka Prefecture. After the six-month exposure, the L value is measured again.

Stain-proofing property after the six-month exposure is evaluated by the following criteria.

A: $\Delta L \leq 3$ (almost no stain)
B: $3 \leq \Delta L \leq 5$ (slightly stained)
C: $5 \leq \Delta L \leq 10$ (stained)
D: $10 \leq \Delta L$ (remarkably stained)

Gloss retention ratio after accelerated weathering test: After the coated test plate is subjected to accelerated weathering test for 1,000 hours in EYE SUPER UV TESTER available from IWASAKI ELECTRIC CO., LTD., gloss of the test plate is measured and a gloss retention ratio G.R. to an initial gloss is obtained by the following equation.

$$\text{G.R. (\%)} = (\text{Gloss after 2,000-hour exposure/Initial gloss}) \times 100$$

The results are evaluated by the following criteria.

○: G.R.$\geq$80 %
△: 80 %>G.R.$\geq$50 %
×: 50 %>G.R.

Appearance after accelerated weathering test: The above-mentioned test plate subjected to accelerated weathering test is synthetically evaluated with naked eyes with respect to cracking of a coating film, occurrence of blister and degree of staining.

TABLE 1

|  | Ex. 1 | Ex. 2 | Ex. 3 | Com. Ex. 1 | Com. Ex. 2 |
|---|---|---|---|---|---|
| White paint | 100 | 100 | 100 | 100 | 100 |
| Emulsion | S1 | S2 | S3 | None | S4 |
| Adding amount of (C) (part by weight) | 15 | 15 | 0 | 0 | 15 |
| Adding amount of (B) (part by weight) | 5 | 5 | 8 | 0 | 0 |
| Gloss | 71 | 70 | 73 | 72 | 42 |
| Pencil hardness (1 week after) | H | H | H | HB | F |
| Xylene resistance (1 week after) | No change up to 100 cycles of rubbing | No change up to 100 cycles of rubbing | No change up to 75 cycles of rubbing | No change up to 50 cycles ot rubbing | No change up to 50 cycles of rubbing |
| Water contact angle after exposure (degree) | 41 | 35 | 65 | 78 | 60 |
| Staining after exposure | A | A | B | D | B |

| (continued) | | | | | |
|---|---|---|---|---|---|
| | Ex. 1 | Ex. 2 | Ex. 3 | Com. Ex. 1 | Com. Ex. 2 |
| Gloss retention ratio after accelerated weathering test | ○ | ○ | ○ | ○ | Δ |
| Appearance after accelerated weathering test | Good | Good | Good | Good | Cracked |

INDUSTRIAL APPLICABILITY

The present invention can provide the resin composition for aqueous paint which has well-balanced non-stain-adhering property and weather resistance and is capable of forming a coating film having a high gloss.

**Claims**

1. A resin composition for aqueous paint which comprises 100 parts by weight of a fluorine-containing resin emulsion (A) (parts by weight of a solid content of the emulsion), from 0.1 to 30 parts by weight of a silane coupling agent (B) represented by the formula (I): $(R^1O)_3SiR^2$, wherein $R^1$ is the same or different and each is an organic group having 1 to 20 carbon atoms, $R^2$ is an epoxy-containing organic group having an epoxy ring and other ring structure, and 1 to 50 parts by weight of a silane compound and/or a partly hydrolyzed condensate thereof (C), said silane compound being represented by the formula (II): $(R^3O)_4Si$ wherein $R^3$ is the same or different and each is an organic group having 1 to 20 carbon atoms, and said fluorine-containing resin emulsion (A) is an emulsion of a fluorine-containing polymer selected from the group consisting of fluoroolefin polymers, fluoroolefin copolymers, copolymers of fluoroolefin and monomer copolymerizable therewith, blended resins of the fluorine-containing polymer with other resins having no fluorine atom, and composite resins of the fluorine-containing polymer with other resins having no fluorine atom.

2. The resin composition for aqueous paint of Claim 1, wherein the silane coupling agent represented by the formula (I) and/or the compound represented by the formula (II) are blended in the form of emulsion.

3. The resin composition for aqueous paint of Claim 1 or 2, wherein the fluorine-containing resin emulsion (A) is an emulsion of a fluorine-containing resin having carboxyl.

4. The resin composition for aqueous paint of any of Claims 1 to 3, wherein the silane compound and/or the partly hydrolyzed condensate thereof (C) is at least one selected from the group consisting of tetramethoxysilane, tetraethoxysilane, tetra-n-propoxysilane, tetra-i-propoxysilane, tetra-n-butoxysilane, tetra-i-butoxysilane, tetra-t-butoxysilane and partly hydrolyzed condensates thereof.

5. The resin composition for aqueous paint of any of Claims 2 to 4, wherein the emulsion of the silane coupling agent (B) or the silane compound and/or the partly hydrolyzed condensate thereof (C) is an emulsion of a nonionic emulsifying agent and/or an anionic emulsifying agent.

6. The resin composition for aqueous paint of any of Claims 1 to 5, wherein a curing catalyst (D) is added in an amount of from 0.1 to 10 parts by weight based on 100 parts by weight of the sum of the silane coupling agent (B) and the silane compound and/or the partly hydrolyzed condensate thereof (C).

**Patentansprüche**

1. Harzzusammensetzung für wässrige Anstrichfarbe, die 100 Gewichtsteile einer fluorhaltigen Harzemulsion (A) (Gewichtsteile eines Feststoffgehaltes der Emulsion), von 0,1 bis 30 Gewichtsteile eines Silan-Haftvermittlers (B), dargestellt durch die Formel (I): $(R^1O)_3SiR^2$, worin $R^1$ gleich oder verschieden ist und jeweils eine organische Gruppe mit 1 bis 20 Kohlenstoffatomen ist, $R^2$ eine epoxyhaltige organische Gruppe mit einem Epoxyring oder einer anderen Ringstruktur ist, und 1 bis 50 Gewichtsteile einer Silanverbindung und/oder eines teilweise hydrolysierten Kondensats davon (C) umfasst, wobei die Silanverbindung dargestellt ist durch die Formel (II): $(R^3O)_4Si$, worin $R^3$ gleich oder verschieden ist und jeweils eine organische Gruppe mit 1 bis 20 Kohlenstoffatomen ist und die fluorhaltige Harzemulsion (A) eine Emulsion eines fluorhaltigen Polymers ist, ausgewählt aus der Gruppe, bestehend aus Fluorolefin-Polymeren, Fluorolefin-Copolymeren, Copolymeren von Fluorolefin und damit copolymerisierbarem Monomer, Mischharzen des fluorhaltigen Polymers mit anderen Harzen ohne Fluoratom und Verbundharzen des fluorhaltigen Polymers mit anderen Harzen ohne Fluoratom.

**2.** Harzzusammensetzung für wässrige Anstrichfarbe nach Anspruch 1, wobei der Silan-Haftvermittler, der dargestellt ist durch die Formel (I), und/oder die Verbindung, die dargestellt ist durch die Formel (II), in der Form einer Emulsion eingemischt sind.

**3.** Harzzusammensetzung für wässrige Anstrichfarbe nach Anspruch 1 oder 2, wobei die fluorhaltige Harzemulsion (A) eine Emulsion eines fluorhaltigen Harzes mit Carboxyl ist.

**4.** Harzzusammensetzung für wässrige Anstrichfarbe nach einem der Ansprüche 1 bis 3, wobei die Silanverbindung und/oder das teilweise hydrolysierte Kondensat davon (C) wenigstens eines ist, das ausgewählt ist aus der Gruppe, bestehend aus Tetramethoxysilan, Tetraethoxysilan, Tetra-n-propoxysilan, Tetra-i-propoxysilan, Tetra-n-butoxysilan, Tetra-t-butoxysilan und teilweise hydrolysierten Kondensaten davon.

**5.** Harzzusammensetzung für wässrige Anstrichfarbe nach einem der Ansprüche 2 bis 4, wobei die Emulsion des Silan-Haftvermittlers (B) oder der Silanverbindung und/oder des teilweise hydrolysierten Kondensats davon (C) eine Emulsion eines nichtionischen Emulgators und/oder eines anionischen Emulgators ist.

**6.** Harzzusammensetzung für wässrige Anstrichfarbe nach einem der Ansprüche 1 bis 5, wobei ein Härtungskatalysator (D) in einer Menge von 0,1 bis 10 Gewichtsteilen, bezogen auf 100 Gewichtsteile der Summe des Silan-Haftvermittlers (B) und der Silanverbindung und/oder des teilweise hydrolysierten Kondensats davon (C), zugegeben ist.

**Revendications**

**1.** Une composition de résine destinée à une peinture aqueuse qui comprend 100 parties en poids d'une émulsion de résine contenant du fluor (A) (parties en poids d'un contenu solide de l'émulsion), de 0,1 à 30 parties en poids d'un agent de pontage constitué par un silane (B) représenté par la formule (I) : $(R^1O)_3SiR^2$, où $R^1$ est le même ou différent et chacun est un groupe organique possédant 1 à 20 atomes de carbone, $R^2$ est un groupe organique contenant une époxyde possédant un anneau d'époxyde et une autre structure en anneau et 1 à 50 parties en poids d'un composant de silane et/ou d'un condensat partiellement hydrolysé de celui-ci (C), ledit composé de silane étant représenté par la formule (II) : $(R^3O)_4Si$ où $R^3$ est le même ou différent et chacun est un groupe organique possédant 1 à 20 atomes de carbone et ladite émulsion de résine contenant du fluor (A) est une émulsion d'un polymère contenant du fluor sélectionnée à partir du groupe consistant en polymères de fluorooléfine, copolymères de fluorooléfine, copolymères de fluorooléfine et en monomères copolymérisables avec eux, en résines du polymère contenant du fluor mélangées à d'autres résines ne possédant aucun atome de fluor et en résines composites du polymère contenant du fluor mélangées à d'autres résines ne possédant aucun atome de fluor.

**2.** Composition de la résine destinée à une peinture aqueuse de la Revendication 1, l'agent de pontage constitué par un silane représenté par la formule (I) et/ou le composant représenté par la formule (II) étant mélangés sous la forme d'une émulsion.

**3.** Composition de résine destinée à une peinture aqueuse de la Revendication 1 ou 2, l'émulsion de résine contenant du fluor (A) étant une émulsion d'une résine contenant du fluor possédant du carboxyle.

**4.** Composition de résine destinée à une peinture aqueuse de l'une quelconque des Revendications 1 à 3, le composant de silane et/ou le condensé partiellement hydrolysé de celui-ci (C) étant au moins l'un de ceux sélectionnés à partir du groupe consistant en tétraméthoxylate, tétraéthoxysilane, tétra-n-propoxysilane, tétra-i-propoxylane, tétra-n-butoxysilane, tétra-i-butoxysilane, tétra-t-butoxysilane et en des condensés partiellement hydrolysés de ceux-ci.

**5.** Composition de résine destinée à une peinture aqueuse de l'une quelconque des Revendications 2 à 4, l'émulsion de l'agent de pontage constitué par un silane (B) ou le composant de silane et/ou le condensat partiellement hydrolysé de celui-ci (C) étant une émulsion d'un agent d'émulsification nonionique et/ou d'un agent émulsifiant anionique.

6.  Composition de résine destinée à une peinture aqueuse de l'une quelconque des Revendications 1 à 5, un catalyseur de durcissement (D) étant ajouté selon une quantité comprise entre 0,1 et 10 parties en poids basée sur 100 parties en poids de la somme de l'agent de pontage constitué par un silane (B) et le composé de silane et/ou le condensat partiellement hydrolysé de celui-ci (C).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6506632 A
- WO 9502462 A
- JP 11148019 A
- JP 10110078 A
- JP 10025446 A
- JP 8259892 A
- JP 2000044836 A
- US P5714532 A

- US P5686523 A
- JP 2000212513 A
- EP 0202494 A
- EP 0806462 A
- JP 2000198920 B
- WO 9508582 A
- JP 2070706 A
- JP 3037252 A